(19) Europäisches Patentamt

European Patent Office

Office européen des brevets

(11) **EP 1 029 163 B1**

(12) **EUROPEAN PATENT SPECIFICATION**

(45) Date of publication and mention
of the grant of the patent:
**28.09.2005 Bulletin 2005/39**

(21) Application number: **98950210.9**

(22) Date of filing: **28.10.1998**

(51) Int Cl.⁷: **F01N 3/28**, F01N 3/02,
B32B 27/12, B32B 29/02

(86) International application number:
**PCT/GB1998/003221**

(87) International publication number:
**WO 1999/023370 (14.05.1999 Gazette 1999/19)**

(54) **COMPOSITE MAT**

VERBUNDMATTE

MAT COMPOSITE

(84) Designated Contracting States:
**AT BE CH CY DE DK ES FI FR GB GR IE IT LI LU
MC NL PT SE**

(30) Priority: **03.11.1997 GB 9723111**

(43) Date of publication of application:
**23.08.2000 Bulletin 2000/34**

(73) Proprietors:
• **Saffil Limited
Sheffield, South Yorkshire S10 3GB (GB)**
• **Ecia
92641 Boulogne (FR)**

(72) Inventors:
• **DINWOODIE, John
Spital, Wirral L6 2EE (GB)**
• **BOFFEY, Stuart, Samuel
Crewe, Cheshire CW1 3AQ (GB)**

• **HORTON, David, John
Middlesbrough, Cleveland TS9 6LA (GB)**
• **WADE, Kathleen, Elizabeth
Northwich, Cheshire CW8 1DS (GB)**
• **STOEPLER, Walter
F-68270 Wittenhelm (FR)**

(74) Representative: **Symons, Rupert Jonathan
HLBBshaw,
10th Floor
1 Hagley Road,
Birmingham B16 8TG (GB)**

(56) References cited:
**EP-A- 0 396 331          DE-A- 3 122 194
FR-A- 2 251 438          GB-A- 2 116 476
US-A- 4 823 845          US-A- 4 863 700
US-A- 5 332 609**

**EP 1 029 163 B1**

**Description**

The present invention relates to a composite mat comprising a layer of inorganic fibres which are bound together with a binder. More particularly, the present invention relates to a laminated composite mat which can be used for resiliently mounting the fragile ceramic or metal monoliths, which are found in catalytic converters, silencers/mufflers and diesel particulate filters, in their metal casings. The invention also relates to a process for preparing a laminated composite mat.

Catalytic converters and diesel particulate filters are routinely fitted to automobiles and other road going vehicles in order to purify the exhaust gases which are generated by the engine. These devices usually comprise a ceramic honeycomb monolith which is housed within a metal casing and provides a support for the catalyst. The ceramic monolith comprises a plurality of tiny flow channels and is a fragile structure which is susceptible to damage when subjected to the kind of vibrational forces which prevail when any road going vehicle is in use. Moreover, the monolith and the surrounding metal casing are subjected to extremely high temperatures in use which causes them to expand, but not to the same extent. In consequence, the mounting system which is used to mount the ceramic monolith in its metal casing must insulate the monolith from the attendant vibrational forces and compensate for any difference between the expansion of the monolith and the casing. In this way, the stresses to which the monolith is subjected during use as a result of differential expansion or vibrational forces can be reduced to an acceptable level.

It is known to use a composite fibre mat to mount the fragile ceramic monolith in the surrounding metal casing, see for example US-4,011,651 and WO-94/24425. The fibre mat is arranged in the annular space between the monolith and the surrounding metal casing and is maintained under compression in the annular space so exerting a radial pressure on the monolith and the casing which retains the monolith in place.

As disclosed in the aforementioned references, the composite fibre mat may consist of inorganic fibres and an organic binder which will be substantially pyrolysed/burned out by the high temperatures to which the mat will be subjected in use. Such a composite mat will be hereinafter referred to as an organic binder mat (OBM).

One test for the suitability of a composite mat for mounting catalytic converters is that it should be capable of being wrapped around a small diameter bar without splitting on the outer surface and in a direction parallel to the axis of the bar. Such splitting can result in loose fibres becoming detached from the mat.

It is an object of this invention to provide a composite mat capable of passing this test.

According to one aspect of this invention, there is provided a composite mat comprising a layer of inorganic fibres and a binder which serves to bind the fibres together and a flexible sheet, the flexible sheet being adhered to at least one side of the layer of inorganic fibre and selected so that the fibres are bonded and do not split off to release loose fibres on bending of the mat, the sheet having a coefficient of static and kinetic friction, measured between the surface of the mat and the surface of the casing in which the mat is to be mounted, which is less than 0.5 and 0.4 respectively and comprising tissue paper which has a weight/area of 5g/m$^2$ to 50 g/m$^2$ and is capable of being stretched by at least 10% of its original length.

The flexible sheet should be as thin as possible, i.e. less than 0.5 mm and preferably of the order of 0.1 mm.

Tissue paper is particularly suitable as it is porous to the binder and is capable of forming an integral part of the mat.

Particularly suitable is a single sheet of tissue paper.

It is advantageous if the flexible sheet has a degree of crimp.

Thus tissue paper capable of being stretched by at least 10% and preferably 22% or more of its original length is particularly suitable.

An appropriate coating may be formed from any film forming polymeric material which results in a flexible skin incorporating the uppermost fibres. For example a latex rubber having a higher glass transition temperature ($T_g$) than the binder material is suitable. The latex may contain a thickening agent to assist in confining the latex to the surface of the fibre layer.

The metal casing in which the catalytic converter monolith is mounted may be of the clam-shell type which consists of two halves which are welded together after the monolith and the mat are installed. Splitting of the mat is particularly important in this type of casing as any loose fibres in the weld area can lead to porous welds due to the presence of the fibre itself or the vapour products of the binder driven off by the heat of the welding.

Alternatively, the casing may be of tubular or unitary construction in which case the mat is wrapped around the monolith which is then slid into the casing. In both cases the friction characteristics of the surface of the mat to be in contact with the casing are important but particularly in the latter case.

Hence it is also an object of the invention to provide the surface of the composite mat with as low coefficients of static and kinetic friction as possible.

According to a further preferred feature of the invention, the flexible sheet is provided with a friction reducing material.

The friction reducing material may be a solid lubricant such as one having a layered structure and added as

2

a loose solid or in the form of a composite sheet.

Suitable materials are, for example, minerals such as talc or vermiculite, or graphite, or molybdenite.

The material may be applied in an amount of from $0.1 g/m^2$ to $1 g/m^2$.

Other means of achieving the desired friction characteristics are possible, such as spray coating the surface of the fibre layer or the flexible sheet with PTFE, liquid lubricants or waxes or applying PTFE tape.

The inorganic fibres contained in the composite mat of the invention may be any of the inorganic fibres known in the art. However, when the composite mat is to be used in catalytic converters and diesel particulate filters for resiliently mounting the ceramic or metal monoliths they contain, the fibres will need to be thermally stable (i.e. will not degrade) at the high operating temperatures prevailing in such devices. Typically, the fibres contained in composite mats which are to be used in such mounting applications will be thermally stable at temperatures in excess of $700°C$, preferably in excess of $800°C$ and more preferably in excess of $900°C$.

The preferred thermally stable inorganic fibres include ceramic fibres such as alumina, mullite, aluminosilicate, aluminoborosilicate, zirconia, titania and silica fibres. Of these alumina fibres, by which term we are also intending to include alumina fibres comprising a few weight % of silica added as a phase stabiliser, are particularly preferred. The fibres are preferably short staple fibres having a length in the range of from 1 to 10 cms and a mean diameter in the range of from I to 10 microns. Especially preferred alumina fibres are those sold in the form of a loosely bound, low density mat by Imperial Chemical Industries PLC under the trade name Saffil which are thermally stable at temperatures in excess of $1000°C$.

The layer may comprise two or more different types of inorganic fibre which may be intimately mixed or else segregated and arranged in definite patterns, e.g. in discrete layers. One of the layers may comprise a composite material incorporating vermiculite plates or other similar minerals which impart intumescent properties.

When a composite mat of the invention is to be used for mounting a ceramic or metal monolith in a catalytic converter or in a diesel particulate filter, the binder contained in the second layer is preferably an organic binder which will be substantially pyrolysed/bumed out by the high temperatures to which the mat will be subjected in use. In addition, the organic binder is preferably one which will not lead to the generation of toxic emissions when it is pyrolysed/burned out and for this reason is preferably free of chlorine and nitrogen.

The loading of the binder in the layer will typically be in the range of 10 from 2 to 15% by weight and preferably in the range of from 5 to 15 % by weight.

When a composite mat of the invention is to be used for mounting a ceramic or metal monolith in a catalytic converter or in a diesel particulate filter, the binder contained in the second layer is preferably an organic binder which will be substantially pyrolysed/bumed out by the high temperatures to which the mat will be subjected in use. In addition, the organic binder is preferably one which will not lead to the generation of toxic emissions when it is pyrolysed/burned out and for this reason is preferably free of chlorine and nitrogen.

The loading of the binder in the layer will typically be in the range of from 2 to 15 % by weight and preferably in the range of from 5 to 15% by weight.

When a composite mat of the invention is to be used to mount a ceramic or metal monolith, the inorganic fibres will generally be held in a compressed state by the binder so that they can exert a pressure which acts between the monolith and the surrounding casing once the binder is removed. Typically, the layer will have a density in the range of from 30 to 700 $kg/m^3$ preferably in the range of from 100 to 500 $kg/m^3$ and more preferably in the range of from 100 to 350 $kg/m^3$.

The binder of the composite mat of the present invention is substantially uniformly distributed throughout the layer. Preferably the distribution of the binder in the layer based on the total weight of the layer in that region is within 40%, more preferably within 30% and particularly preferably within 20% of the overall percentage by weight of binder in the layer based on the total weight of the layer. In an especially preferred embodiment, the distribution of the binder in the second layer is such that the percentage by weight of binder in each 1 $mm^3$ region of the layer based on the total weight of the layer in that region is within 10% of the overall percentage by weight of binder in the layer based on the total weight of the layer.

In the composite mat, of the present invention, the layer has a laminar shear strength, by which is meant the force which has to be applied in order to bring about delamination of the layer, of at least 0.1 MPa, preferably of at least 0.2 MPa and more preferably of at least 0.3 MPa. The laminar shear strength can be conveniently measured on an Instron or similar machine using a three point bend test. Preferably, the layer is also capable of exerting a pressure of at least 1.0 $kgf/cm^2$ more preferably in the range of from 1.5 to 4.0$kgf/cm^2$ when a sample of the layer having a thickness in the range of from 5 to 10 mm is compressed to a thickness of 3 mm between two plates and the binder removed.

The layer is conveniently formed by impregnating a fibre mass comprising the inorganic fibres with a liquid binder system comprising the binder or a precursor thereof and a carrier liquid, After the fibre mass has been impregnated with the liquid binder system, and generally following removal of any excess carrier liquid, the impregnated fibre mass is subjected to a drying step. The impregnated fibre mass is preferably held under compress ion during at least a part of the drying step until such time as the binder is able to hold the fibres together and significantly limit the expansion of the fibrous layer once the compressive forces are released. In general, the whole of the drying step will be performed while the impregnated fibre mass is held under compression, but it may also be possible to perform just the final stages of the drying step, in this manner and still obtain satisfactory results. During the drying step, substantially all and preferably all of any residual carrier liquid will be removed. Removal of excess carrier liquid prior to drying can be achieved by pressing the impregnated fibre mass between rollers or plates, by placing it under vacuum or by centrifuging.

The pressure which is usually applied during the drying step to compress the impregnated fibre mass will generally be in the range of from 5 to 500 KPa, preferably in the range of from 5 to 200 KPa. In general, the pressure applied is such as to produce a bound fibrous layer having a density in the range of from 30 to 700 kg/m$^3$ preferably in the range of from 100 to 500 kg/m$^3$ more preferably in the range of from 100 to 350 kg/m$^3$. When the fibre mass which is impregnated is a multi-fibre produce having a thickness in the range of from 10 to 60 mm, e.g. in the range of from 30 to 50 mm, and an area density in the range of from 0.2 to 2.0 kg/m$^2$ e.g. in the range of from 1.0 to 2.0 kg/m$^2$ the resulting impregnated fibre mass will generally be compressed to a thickness in the range of from 2 to 5 mm during the drying step. This pressure is conveniently applied in a batch process by sandwiching the impregnated fibre mass or a laminate of the impregnated fibre mass and a preformed intumescent sheet between plates and then squeezing the plates together, e.g. by means of clamps, spring loaded clips or hydraulic presses. Alternatively, in a continuous process, it may be convenient to generate the necessary compressive forces on the impregnated fibre mass using an arrangement of rollers or belts.

The fibre mass which is impregnated may comprise a plurality of discrete fibres or it may take the form of a multi-fibre produce in which the individual fibres are assembled into a low density mat which is loosely held together by fibre intertwining or perhaps more robustly consolidated by some other means such as weaving, knitting, stitching, needle-punching or vacuum packing. Preferably, the fibre mass which is impregnated is a multi-fibre product, particularly one having a thickness in the range of from 10 to 60 mm, more particularly in the range of from 30 to 50 mm, and an area density in the range of from 0.2 to 2.0 kg/m$^2$ more particularly in the range of from 1.0 to 2.0 kg/m$^2$.

The liquid binder system may comprise an inorganic binder material, but preferably comprises an organic binder or a precursor thereof and an organic or aqueous carrier liquid which is able to dissolve or disperse the organic binder or precursor. Suitable binder systems are described in US-4,011,651 and WO-94124425 and include dispersions or solutions of polymers or of curable precursor polymers (prepolymers) which can be cured in situ on the impregnated fibre mass as part of the drying step or in a subsequent processing step. The organic binder or its precursor may be a recyclable material which allows for the recovery of fibres from waste product generated in the manufacture of the laminated composite mat of the invention. A particularly suitable binder system is one comprising a dispersion, preferably an aqueous dispersion, of a curable polymer composition, sometimes termed a resin or latex. Suitable examples of curable polymer compositions are those comprising a combination of an acrylic polymer and a cross-linking agent, particularly an epoxy group containing cross-linking agent such as an epoxy resin.

Curable polymer compositions of this type will typically comprise from 90.0 to 99.0 % by weight, preferably from 95.0 to 99.0 % by weight of the acrylic polymer and from 1.0 to 10.0% by weight, preferably from 1.0 to 5.0 % by weight of the cross-linking agent. The acrylic polymer is suitably a homopolymer of copolymer comprising monomer units derived from at least one acrylic monomer selected from the $C_{1-8}$acryl($C_{1-4}$alkyl) acrylates, and in a preferred embodiment is a homopolymer or copolymer comprising monomer units derived from at least one acrylic monomer selected from the $C_{1-4}$ alkyl (meth) acrylates, for example methyl methacrylate, methyl acrylate, ethyl acrylate, propyl acrylate and butyl acrylate. A preferred binder system is one comprising an aqueous dispersion of a curable copolymer based on n-butyl acrylate and methacrylic acid.

When the liquid binder system is one comprising a curable polymer composition, it may also comprise a catalyst to accelerate the curing process.

It will be appreciated from the above, that by the term liquid binder system we are also intending to include binder systems which comprise dispersions or suspensions of finely divided solids in liquid vehicles.

The liquid binder system will typically comprise from 0.5 to 50.0 % by weight of the binder or precursor and from 50.0 to 99.5 % by weight of the carrier liquid. Preferably the liquid binder system will comprise from 0.5 to 10.0% by weight, more preferably from 1.0 to 5.0% by weight of the binder or precursor and from 90.0 to 99.5% by weight, more preferably from 95.0 to 99.0% by weight of the carrier liquid.

The drying step normally involves the application of heat. A conventional oven may be employed to provide the heating, but dielectric heating such as microwave or radio frequency heating, preferably in combination with a conventional heating means such as a flow of hot air, can result in an appreciably more uniform distribution of the binder in the second fibrous layer. Typically, the drying step will involve heating the impregnated fibre mass to a temperature in the range of from 80 to 200°C, preferably in the range of from 100 to 170°C. Temperatures in the range of from 140 to 160°C are especially preferred.

According to a second aspect of the present invention there is provided a method for the production of a composite mat comprising a layer of inorganic fibres and a binder which serves to bind the inorganic fibres together and to bond the layer to a flexible sheet comprising tissue paper which has a weight/area of 5g/m$^2$ to 50g/m$^2$ and is capable of being stretched by at least 10% of its original length, which method comprises impregnating a fibre mass comprising the inorganic fibres with a liquid binder system comprising the binder or a precursor thereof and a carrier liquid and subjecting the impregnated fibre mass which is obtained to a drying step while in contact with said flexible sheet so as to at least substantially remove the carrier liquid, the so-formed mat being mountable in a casing, the sheet having a coefficient of static and kinetic function which is less than 0.5 and 0.4 respectively.

In the method of this second aspect, the drying step normally involves the application of heat. A conventional oven may be employed to provide the heating, but in a preferred embodiment dielectric heating such as microwave or radio frequency heating, preferably in combination with a conventional heating means such as a flow of hot air, is employed. The typical and preferred temperatures employed in the dry step are as described above.

In the method of this second aspect, a layer of inorganic fibres can be deposited on the flexible sheet and then impregnated with the liquid binder system while in position on that sheet. Removal of the carrier liquid from the impregnated fibre layer and curing of the precursor binder when such a material is Used will produce a laminated composite mat of the invention in which the layer of inorganic fibres is bound together and also bonded to the flexible sheet by the action of the binder which is left behind. Alternatively, the fibre mass may first be impregnated with the liquid binder system and then deposited on one side of the flexible, sheet to form a layer. As before, removal of the carrier liquid from the impregnated fibre mass and curing of the precursor binder when used will produce a laminated composite mat of the invention, but with this latter technique a proportion of the carrier liquid can be removed from the impregnated fibre mass before it is deposited on the flexible sheet.

It may also be advantageous to coat the flexible sheet with the liquid binder system prior to depositing the fibre mass or impregnated fibre mass thereon, e.g. by spraying the sheet with the liquid binder system or by immersing the sheet in a bath of the liquid binder system.

In this second aspect of the present invention, any removal of excess carrier liquid prior to drying can be achieved either before or when the impregnated fibre mass is in position on the flexible sheet. It may also be desirable to subject the impregnated fibre mass to a pre-drying step, in which a substantial proportion of the carrier liquid is removed by the application of heat, before it is laid in position on the flexible sheet. The drying step itself is carried out while the impregnated fibre mass is in position on the flexible sheet.

Various techniques may be used to impregnate the mass of inorganic fibres. For example, the individual fibres may be thoroughly dispersed in the liquid binder system and the resulting dispersion cast into a layer, e.g. using a paper making process which may involve the use of a flocculating agent for the binder. Alternatively, the dispersion can be cast as a layer on a flexible sheet or individual fibres may be deposited as a layer, e.g. on a flexible sheet, and the resulting fibre layer impregnated with the liquid binder system.

When the mass of inorganic fibres takes the form of a multi-fibre product in which the individual fibres are assembled into a low density mat, the mat may be simply immersed or soaked in the liquid binder system. Alternatively, the low density fibre mat may be sprayed with the liquid binder system. In the method of the second aspect of the present invention, treatment of the mat with the liquid binder system may be carried out either before or after the mat is laid in position on the flexible sheet.

When the liquid binder system comprises a dispersion of a curable precursor polymer, as is preferred the drying step may be followed by a further processing step in which the precursor polymer is cured. This curing process preferably involves the precursor polymer undergoing some form of cross-linking reaction. However, the temperatures which are employed in the drying step are usually sufficient to both dry the impregnated fibre mass and cure the precursor polymer so that a separate curing step is generally unnecessary. When a separate curing step is employed, however, it is desirable to maintain the impregnated fibre mass under compression for the duration of the curing step.

In an alternative process, the flexible sheet or the coating may be applied and adhered after the fibre layer has been compressed and dried.

The thickness of the composite mat of the invention will depend on the intended end use for the mat. However, when the composite mat is to be used to mount a ceramic or metal monolith in a catalytic converter or diesel particulate filter, it will typically have a thickness in the range of from 3 to 15 mm, preferably in the range of from 5 to 12 mm and more preferably in the range of from 5 to 9 mm.

The laminated composite mat of the invention may also be used to support the ceramic monoliths found in hot gas filtration units and coal gasification plants. The laminated composite mat of the invention may also be usefully employed in gasket applications.

The present invention is now illustrated but not limited with reference to the following examples.

## Example 1

Samples of Saffil (TM) low density alumina fibre mat each having an area of about 520 mm by 210 mm and a thickness of from 25 to 55 mm were immersed in a latex (Neocryll (TM), A2022 a 60% aqueous dispersion of a curable copolymer based on n-butyl acrylate and methacrylic acid available from Zeneca Plc) which had been diluted to a solids content of around 5% w/w. The impregnated Saffil mat weighed approximately 131.0 g and had an area density of about 1.2 kg/m$^2$.

The impregnated Saffil mats were then laid on top of similar sized 10 pieces of various flexible sheet. The resulting laminate was sandwiched between two sheets of PTFE-coated glass fibre mesh which provided a release surface and this sandwich was then placed between two sheets of glass fibre filled silicone resin board. The whole assembly was then pressed together using mole grips until the impregnated layer was reduced to a thickness of about 5 mm (equal to an applied pressure of about 0.5. bar (50 KPa)), and held in this position with clips. During this assembly excess latex drained from the samples.

The complete mould assembly was then placed on the belt of an air/radio frequency (RF) assisted oven and the belt speed was adjusted to give a residence time of about 20 minutes. The RF power to the oven was set at about 5.5 KW and the temperature of the air in the oven was adjusted to about 155°C. The sample was removed from the oven when the latex had been fully dried and cured (cross-linked). The clips and the boards were then carefully removed from the samples and the PTFE mesh peeled off to reveal the final composite mat which had a thickness of around 8 to 9 mm.

Each sample was then wrapped around a 20 mm diameter bar and checked for delamination and splitting.

The results are shown in Table 1.

Table 1

| Sample | Flexible Sheet | Delamination | Splitting |
|--------|----------------|--------------|-----------|
| 1 | Kimwipe single layer | None | None |
| 2 | Whatman No.1 Filter paper | None | None |
| 3 | Craft paper | None | None |
| 4 | Tissue paper | None | None |
| 5 | Craft paper plus tissue paper | None | None |
| 6 | PET film | None | None |
| 7 | Tissue paper on both sides | None | None |

The tissue paper had a weight/area of 22g/m$^2$

Samples 1-3 and 6 are comparative examples.

## Example 2

Further samples were prepared as in Example 1. In addition other samples 5 were prepared in which the pressure plates were perforated. A further comparative sample was prepared in which the flexible sheet was omitted for comparison purposes.

The coefficient of static and kinetic friction were measured in the following, way.

A 40 cm$^2$ piece was cut from a sample and placed on a surface having friction characteristics equivalent to the surface of the casing. A friction sleigh with a 200 gm weight attached to a load cell via a pulley was placed on the sample. The sample was pulled along the friction surface and the force required to start the movement and the force required to maintain the movement were measured. The coefficient of static and kinetic friction were calculated as follows.

$$\text{Static Friction} = \frac{\text{Initial Force to start Movement}}{\text{Force Preventing Movement}}$$

$$\text{Kinetic Friction} = \frac{\text{Force to Maintain Movement}}{\text{Force Preventing Movement}}$$

Force Preventing Movement = Weight of Sleigh.

The results are shown in Table 2.

Table 2

| Samples 1-5 are comparative examples. | | | |
|---|---|---|---|
| **Sample** | **Flexible Sheet** | **Static Friction** | **Dynamic Friction** |
| 1 | OBM(None) | 0.73 | 0.44 |
| 2 | OBM plus talc | 0.17 | 0.17 |
| 3 | Silicon Paper | 0.18 | 0.18 |
| 4 | Grease Paper | 0.2 | 0.2 |
| 5 | PET Film | 0.21 | 0.21 |
| 6 | Tissue Paper | 0.25 | 0.24 |
| 7 | Tissue Paper plus talc | 0.16 | 0.14 |
| 8 | Tissue Paper plus PTFE | 0.18 | 0.18 |

## Example 3

A sample was prepared as in Example 1 using tissue paper having a weight area of 22 gm/m$^2$ and a 22% crimp factor. After drying, 0.2 gm/m$^2$ talcum powder was applied as friction reducing material. The composite mat had a thickness of 8 mm and when wrapped around a monolith produced a package having an external diameter of 146 mm. The monolith/mat package was easily inserted into a unitary casing having an internal diameter of 138 mm without wrinkling or tearing of the mat and exerted a pressure of 2.0 kgf/cm$^2$ on the casing after heating to remove the binder. In contrast, a sample not including the talcum powder could not be inserted unless the internal diameter of the casing was increased to 143 mm which only provided a pressure of 0.3 kgf/cm$^2$ which is insufficient for long term support of the monolith.

## Example 4

Example 3 was repeated except that the tissue paper was not present. Similar 5 results were observed and in addition there was some splitting of the mats when they were wrapped around the monolith.

## Claims

1. A composite mat comprising a layer of inorganic fibres and a binder which serves to bind the fibres together and a flexible sheet, the flexible sheet being adhered to at least one side of the layer of inorganic fibre, and selected so that the fibres are bonded and do not split off to release loose fibres on bending of the mat, the flexible sheet having a coefficient of static and kinetic friction, measured between the surface of the mat and the surface of the casing in which the mat is to be mounted, which is less than 0.5 and 0.4 respectively, and the flexible sheet comprising tissue paper which has a weight/area of 5g/m$^2$ to 50 g/m$^2$ and is capable of being stretched by at least 10% of its original length.

2. A mat according to Claim 1, wherein the inorganic fibres are alumina fibres having a length in the range of from 1 to 10 cm and a mean diameter of 1 to 10 $\mu$m.

3. A method for the production of a composite mat comprising a layer of inorganic fibres and a binder which serves to bind the inorganic fibres together and to bond the layer to a flexible sheet comprising tissue paper which has a weight/area of 5g/m$^2$ to 50 g/m$^2$ and is capable of being stretched by at least 10% of its original length, which method comprises: impregnating a fibre mass comprising the inorganic fibres with a liquid binder system comprising the binder or a precursor thereof and a carrier liquid; and subjecting the impregnated fibre mass which is obtained to a drying step while in contact with said flexible sheet so as to substantially remove the carrier liquid, the so-formed mat being mountable in a casing, the flexible sheet having a coefficient of static and kinetic friction which is less than 0.5 and 0.4 respectively.

**EP 1 029 163 B1**

**Patentansprüche**

1. Verbundmatte, umfassend eine Schicht anorganischer Fasern und ein Bindemittel, welches zur Bindung der Fasern aneinander dient, und einen flexiblen Bogen, wobei der flexible Bogen an mindestens einer Seite der Schicht der anorganischen Fasern haftet und so ausgewählt ist, dass die Fasern gebunden sind und nicht absplittern, um lose Fasern freizusetzen, wenn die Matte gebogen wird, wobei der flexible Bogen einen Koeffizienten statischer und kinetischer Reibung aufweist, gemessen zwischen der Oberfläche der Matte und der Oberfläche des Gehäuses, in das die Matte eingebaut werden soll, welcher weniger als 0,5 bzw. 0,4 beträgt, und der flexible Bogen Seidenpapier umfasst, welches ein Flächengewicht von 5 $g/m^2$ bis 50 $g/m^2$ aufweist und um mindestens 10% seiner ursprünglichen Länge gedehnt werden kann.

2. Matte nach Anspruch 1, wobei die anorganischen Fasern Aluminiumoxidfasern mit einer Länge im Bereich von 1 bis 10 cm und einem mittleren Durchmesser von 1 bis 10 $\mu$m sind.

3. Verfahren zur Herstellung einer Verbundmatte, umfassend eine Schicht anorganischer Fasern und ein Bindemittel, welches zur Bindung der anorganischen Fasern aneinander und zur Bindung der Schicht an einen flexiblen Bogen dient, welcher Bogen Seidenpapier umfasst, das ein Flächengewicht von 5 $g/m^2$ bis 50 $g/m^2$ aufweist und um mindestens 10% seiner ursprünglichen Länge gedehnt werden kann, welches Verfahren umfasst: Imprägnieren einer Fasermasse, welche die anorganischen Fasern umfasst, mit einem flüssigen Bindersystem, umfassend das Bindemittel oder einen Vorläufer davon und eine Trägerflüssigkeit; und
Unterwerfen der imprägnierten Fasermasse, welche erhalten wird, einem Trocknungsschritt, während sie sich in Kontakt mit dem flexiblen Bogen befindet, um die Trägerflüssigkeit im Wesentlichen zu entfernen, wobei die so gebildete Matte in ein Gehäuse einbaubar ist und der flexible Bogen einen Koeffizienten statischer und kinetischer Reibung aufweist, der weniger als 0,5 bzw. 0,4 beträgt.

**Revendications**

1. Mât composite comprenant une couche de fibres inorganiques et un liant qui sert à lier les fibres ensemble et une feuille souple, la feuille souple adhérant à au moins un côté de la couche de fibre inorganique, et choisie de sorte que les fibres sont liées et ne se détachent pas en libérant des fibres lâches lorsque le mât se courbe, la feuille souple ayant un coefficient de frottement statique et dynamique, mesuré ent0e la surface du mât et la surface du boîtier dans lequel le mât sera monté, qui est inférieur respectivement à 0,5 et à 0,4, et la feuille souple comprenant du papier mince qui a un poids/surface de 5 $g/m^2$ à 50 $g/m^2$ et peut être étirée d'au moins 10 % de sa longueur d'origine.

2. Mât selon la revendication 1, dans lequel les fibres inorganiques sont des fibres d'alumine ayant une longueur de l'ordre de 1 à 10 cm et un diamètre moyen de 1 à 10 $\mu$m.

3. Procédé de production d'un mât composite comprenant une couche de fibres inorganiques et un liant qui sert à lier les fibres inorganiques ensemble et à lier la couche à une feuille souple comprenant du papier mince qui a un poids/surface de 5 $g/m^2$ à 50 $g/m^2$ et peut être étiré d'au moins 10 % de sa longueur d'origine, lequel procédé comprend les étapes consistant à :

   - imprégner une masse de fibres comprenant les fibres inorganiques avec un système de liant liquide comprenant le liant ou un précurseur de ce dernier et un liquide porteur ; et
   - soumettre la masse de fibres imprégnée qui est obtenue à une étape de séchage lorsqu'elle est en contact avec ladite feuille souple afin de retirer sensiblement le liquide porteur, le mât ainsi formé pouvant être monté sur un boîtier, la feuille souple ayant un coefficient de frottement statique et dynamique qui est inférieur respectivement à 0,5 et à 0,4.